# EUROPEAN PATENT SPECIFICATION

(11) **EP 3 934 499 B1**
(45) Date of publication and mention of the grant of the patent: **28.05.2025**
(21) Application number: 20709305.5
(22) Date of filing: 03.03.2020
(51) Int. Cl.: A47L 5/24, A47L 9/12

(54) **VACUUM CLEANER**
STAUBSAUGER
ASPIRATEUR

(30) Priority: 04.03.2019 GB 201902894
(43) Date of publication of application: 12.01.2022
(73) Proprietor: NUMATIC INTERNATIONAL LIMITED, Camberley Surrey GU15 3SY (GB)
(72) Inventor: LAWRENCE, Ian, Chard Somerset TA20 2GB (GB); ASTON, Marcus, Chard Somerset TA20 2GB (GB); FORREST, James, Chard Somerset TA20 2GB (GB); BEVIS, Ian, Chard Somerset TA20 2GB (GB)
(74) Representative: Cleveland Scott York
(86) International application number: PCT/GB2020/050503
(87) International publication number: WO 2020/178572

(56) References cited:
- EP-A2- 2 110 062
- CN-A- 1 295 448
- KR-A- 20030 035 629

## Description

The present invention concerns the field of vacuum cleaners and, in particular, those which have a filter bag for collecting air entrained detritus. The invention relates especially to a vacuum cleaner which reduces the exposure to the operator of dust and contaminated matter collected during cleaning when replacing the filter bag.

Conventional domestic or commercial vacuum cleaners have a vacuum suction motor for sucking air entrained dirt via a nozzle or aperture which feeds into a collection chamber. An air filter such as a porous bag is provided for separating the dirt from the airflow. Vacuum cleaners may be characterised as upright (in which the collection chamber is attached to an upright, articulate handle portion), or cylinder (in which a drum or canister contains the suction motor and collection chamber, and the chamber is fed by an elongate suction tube with a nozzle at the distal end). Such cylinder machines are available from Numatic International Ltd under the Henry (RTM) trade name. Handheld vacuum cleaners are also available which may be battery or mains powered, but of a size and weight which admits of convenient manual use. These may be provided with a handle or grip and a trigger as on/off actuator.

KR20030035629 relates to a removable dust filter structure of a wireless vacuum cleaner. A separate dust filter receiving space is formed at a lower side of the body and the filter is removable in a radial direction by lifting the filter out of the cleaner. EP2110062 is the closest prior art and discloses a portable vacuum cleaner with two filters for removal of fine and coarse material. One filter element has a cleaning member mounted thereon such that removal of the filter element removes particles on the second filter element. CN1295448A covers a vacuum with a filter having a rectilinear cross section. The vacuum maximises the filter surface area by spacing the filter from the inner wall to maximise the free volume of air surrounding the filter. US2016/0015229A1 discloses portable cleaning apparatus with a cyclone bin assembly removably mounted to the main body with an actuator provided on the cyclone bin assembly to allow removal without a user having to change their grip.

One problem with vacuum cleaners is that they require emptying, typically by opening a collection chamber to tip the contents into a refuse sack, or by detaching a filter bag from inside the collection chamber. This can be a dirty and inconvenient process, with collected dust and detritus prone to spilling as the bag is detached, sometimes forming dust clouds. In cases in which the collected dust may be contaminated, or in intrinsically harmful, the emptying process may expose an operator to hazardous dust.

The present invention seeks in one or more of its various aspects to facilitate the emptying of dust collected in a vacuum cleaner, especially to limit the escape of dust and reduce the need for manual manipulation and the operator's exposure to dirt and dust.

According to one aspect of the invention there is provided a vacuum cleaner as claimed in claim 1.

The chamber is generally cylindrical in form. In the open configuration a chamber wall portion is displaced to remove the constraint.

In one embodiment of another invention the chamber wall portion may comprise a generally cylindrical portion. This portion may be displaced by translational movement of the cylindrical wall portion in an axial direction.

The generally cylindrical wall portion may be mounted for sliding travel along a base plate. The translational movement is typically to an extent which is beyond a length of the filter cartridge, so that the cartridge may be removed in a radial direction via an aperture created by the movement of the cylindrical wall portion.

The generally cylindrical chamber wall portion may have a distal (or nozzle) end which is provided with an aperture which serves as the fluid inlet port.

According to the invention, the chamber wall portion is an end-cap of the chamber. The end-cap may be displaced (as hereinbefore described) by opening thereof. The end-cap may be hinged with respect to the chamber so as to be openable by hinged rotation of the end-cap. The end-cap is typically provided at a nozzle-end region of the chamber. The fluid inlet is provided through the end-cap. This inlet may be fed by a hose, or nozzle, brush bar or another suitable means for entraining dirt or liquid in a gas stream.

A release latch mechanism may be provided for the end-cap, operation of which causes or permits the end-cap to be displaced from the closed to open configuration. The latch mechanism may comprise an axially slidable actuation shuttle, travel of which displaces a release latch. The latch mechanism may include biasing means which acts to urge the end-cap to the open configuration, so that on release the end-cap springs open. The biasing means may be a compression spring. The biasing means may act on the shuttle. The shuttle may act to shift a cam which acts on a hinging portion of the end-cap. A manually operated lever may be provided to actuate the release latch, typically by tilting the lever about a pivot axis.

A vacuum cleaner in accordance with yet another aspect of the invention may be configured and arranged so that in the open configuration the filter cartridge is free to drop-out from the chamber under gravity when the appropriate orientation of the chamber permits.

In a further aspect of the invention the vacuum cleaner may be configured as a hand-held vacuum cleaner having a longitudinal axis, the cleaner comprising at a proximal end region thereof a suction drive in fluid communication with a generally cylindrical vacuum chamber disposed adjacent the suction drive, the vacuum chamber being aligned co-axially with the longitudinal axis, or an axis parallel thereto, a co-axial inlet port for air entrained dirt being provided through a distal end wall of the vacuum chamber, the port being fed by a nozzle provided at a distal end region of the vacuum cleaner, wherein a pistol grip is provided at the proximal end region, which pistol grip extends in a generally radial direction so as to facilitate manual pointing of the vacuum cleaner chamber and nozzle along the longitudinal axis.

The filter cartridge may be located in the vacuum chamber. The cartridge may have a generally cylindrical configuration with an annular distal end which defines an inlet port of the cartridge which opens into the cartridge interior, which inlet port is aligned with the inlet port of the vacuum chamber. The cartridge may have an annular seal (or bead) around the inlet port, which seal acts on an inside face of the end-cap, around the chamber inlet port.

In the present invention the absence of a fluid inlet stub tub, spigot or other male feature which engages and enters the cartridge inlet port facilitates removal of the filter cartridge as it can fall away (or be lifted out) without having to axially disengage the cartridge from any such stub tub (etc.).

A generally annular space may be defined between the generally cylindrical filter cartridge and an inside surface of the generally cylindrical vacuum chamber. The generally annular space may be in fluid communication with the suction drive. This provides an exit path around the cartridge for filtered air passing out of the cartridge filter.

The cartridge may be elongate and disposed in the vacuum coaxial with, or parallel to, the longitudinal axis.

The filter cartridge preferably comprises supporting structure which defines and locates the airflow inlet. This could be an annular plate, or spider member, or another generally planar rigid structure. The supporting structure may be provided at an airflow inlet end of the cartridge. In a preferred arrangement the filter cartridge comprises supporting structure which makes the cartridge self-supporting whereby to define and maintain an internal space in the cartridge. The supporting structure may include a tongue or tab adjacent the airflow inlet, which tongue or tab serves to facilitate grasping or lifting the filter cartridge.

In yet a further aspect of the invention there may be provided a filter cartridge as hereinbefore described.

Following is a description, by way of example only and with reference to the figures of the drawings of modes of putting the present invention into effect.

In the drawings: -
Figure 1 is a perspective three quarter view of a vacuum cleaner in accordance with another invention.
Figure 2 is a perspective three quarter view of the vacuum cleaner of figure 1 along with a filter cartridge, the vacuum cleaner being in an open configuration for insertion/removal of the filter cartridge.
Figure 3 is a side view of the open vacuum cleaner from figure 2 with filter cartridge in place.
Figure 4 is a perspective three quarter view of the vacuum cleaner in accordance with an embodiment of the present invention.
Figure 5 is a perspective three quarter view of the vacuum cleaner of figure 4, the vacuum cleaner being in an open configuration with a filter cartridge outside.
Figure 6 is a side view of the vacuum cleaner of the second embodiment with an open configuration designated by ghost (dashed) lines.

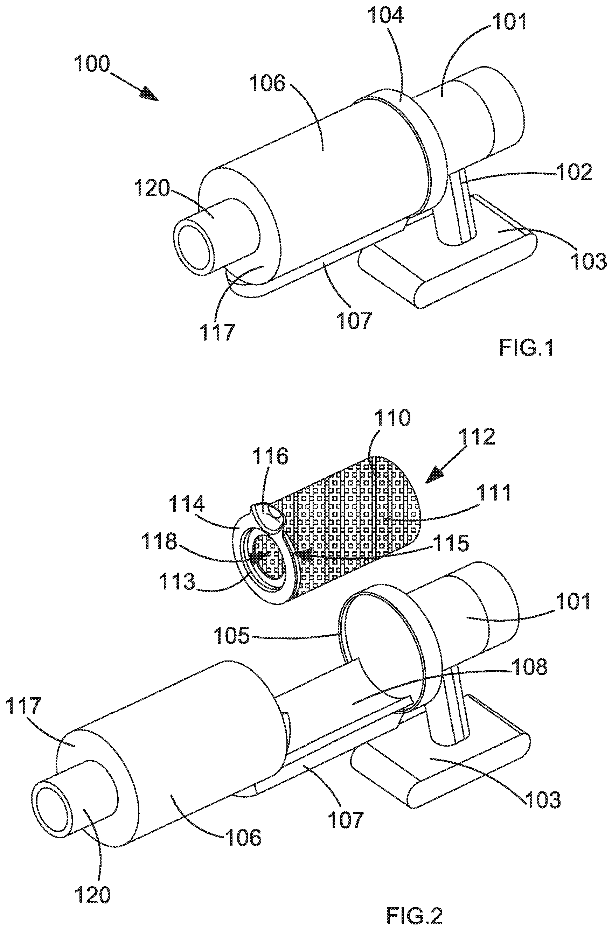

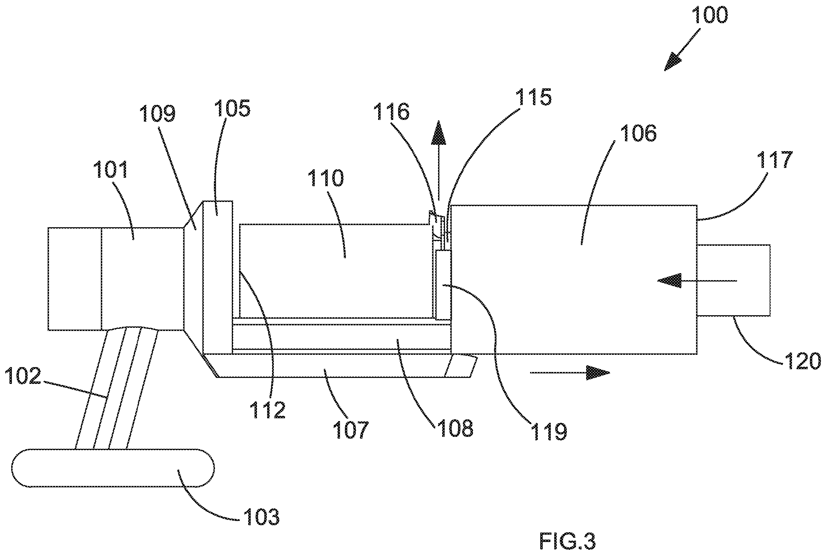

A first hand-held vacuum cleaner of another invention is shown generally as 100 in figure 1. The cleaner includes a cylindrical motor and suction fan housing 101. Depending from a wall of the fan housing is a 'pistol' hand grip 102, best seen in figure 3. Attached to a distal end of the grip is a battery pack 103 which includes multiple rechargeable cells (not visible), such as Li-ion cells. The battery pack has a generally planar configuration with curved front and rear walls, and flat vertical side cheeks, as shown in figure 1.

A cylindrical base cap 104 is attached to a front end of the fan housing 101. The base cap includes a circumferential lip 105 shown in figure 2, and a frusto-conical tapered region 109 which joins the fan housing front end (see figure 3). This cap defines a region that is in fluid communication with the internal fan in the fan housing 101, although the internal port and fan are not shown for the sake of simplicity and clarity. The lip 105 and cap provide a seat in which is accommodated a cylindrical vacuum chamber housing 106, shown in figure 1. The chamber is coaxial with the motor and suction fan housing and the base cap. A curved support tray 107 is provided extending as a strut in an axial direction from a lower region of the base cap 104. This tray supports the chamber housing 106, whilst permitting the chamber housing to slide axially between the closed configuration shown in figure 1 and the open configuration shown in figure 2 and in which the chamber housing is displaced in a forward direction. The interior of the chamber housing is provided with further curved support tray 108. The further tray 108 has a curve co-axial with the chamber housing, but with a reduced radius so that the tray sits within the circumference of the chamber housing, at a lower region thereof, as shown in figure 2. This further tray supports and locates a filter cartridge (pod) 110 when inserted into the vacuum chamber housing (as shown in figure 3.

The filter cartridge has a cylindrical body portion 111, formed of a porous filter membrane (such as a HEPA filter), and a disc-shaped end-cap 112, also formed of the filter membrane, which may be attached by a glued seam, or weld or moulded to as a unitary component with the body portion. A front end of the filter cartridge has an annular collar 113 which provides an annular face plate 114. The collar is formed with a waist region 115 which defines an annular recess behind the face plate. The collar is also provided with an integrally moulded, radially inset, thumb grip 116, which facilitates removal of the filter pod from an open vacuum cleaner. The collar is formed of rubberised plastics material which provide sufficient rigidity to support the filter shape, but which forms an air seal when the annular face plate 114 abuts an inside surface of the front wall 117 of the vacuum chamber housing. The collar 113 defines an opening 118 into the interior of the cartridge (see figure 2).

A front-end region of the vacuum chamber housing is formed with a co-axial stub tube 120. The stub tube serves as an air inlet port from a nozzle or hose (neither shown) of the vacuum cleaner. The inlet port feeds into the interior of the vacuum chamber. When the vacuum cleaner is loaded with a cartridge the collar is located as a sliding fit in a U-form retainer member 119. The retainer has an inward facing lip (not visible) which is received by the waist region 115 of the collar. In this way the collar is held in alignment with the stub tube and end wall 117 of the vacuum chamber so that the stub tube feeds directly into to the circular opening 118 of the cartridge filter. An annular region is provided around the outside of the filter cartridge in the gap between the vacuum chamber inside wall. This is in air communication with the suction fan via the interior of the base cap 104. In use, this induces air to flow through the stub tube, into the filter interior and past the filter membrane into the suction fan.

When the filter cartridge is full, or a cleaning task is complete, the vacuum chamber may be slid forwards to the open configuration, as shown in arrow 1 in figure 2, and the thumb grip pulled so that the collar is disengaged with the U-form retainer member 119, in the direction of the vertical arrow 2 in figure 3. The cartridge may then be disposed of a new cartridge inserted. Because the body of the filter cartridge is not gripped during removal, there is no tendency for air and dirt (or collected matter) to puff out of the filter.

### Embodiment of the present invention

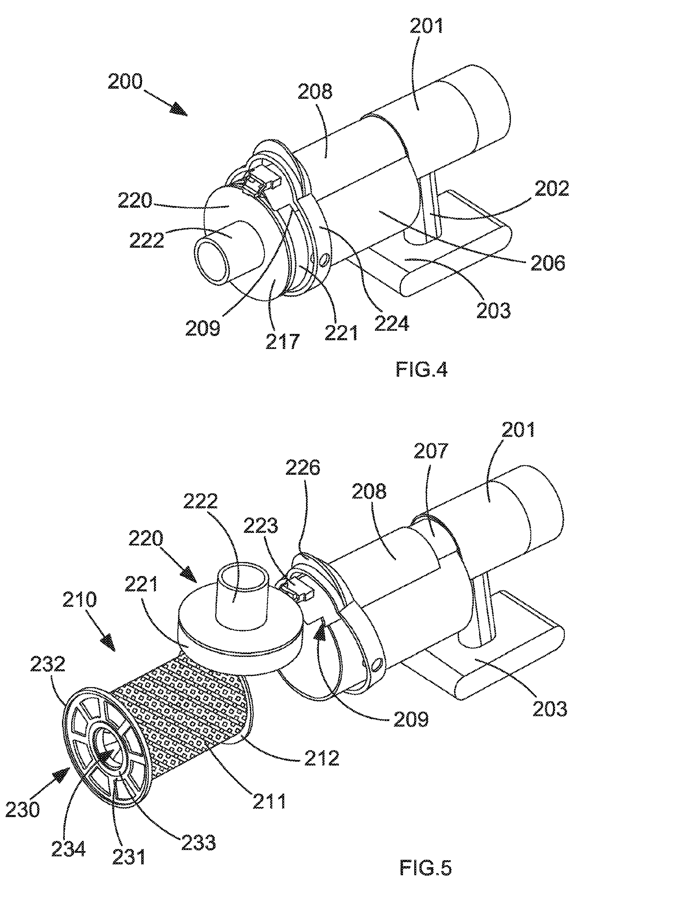

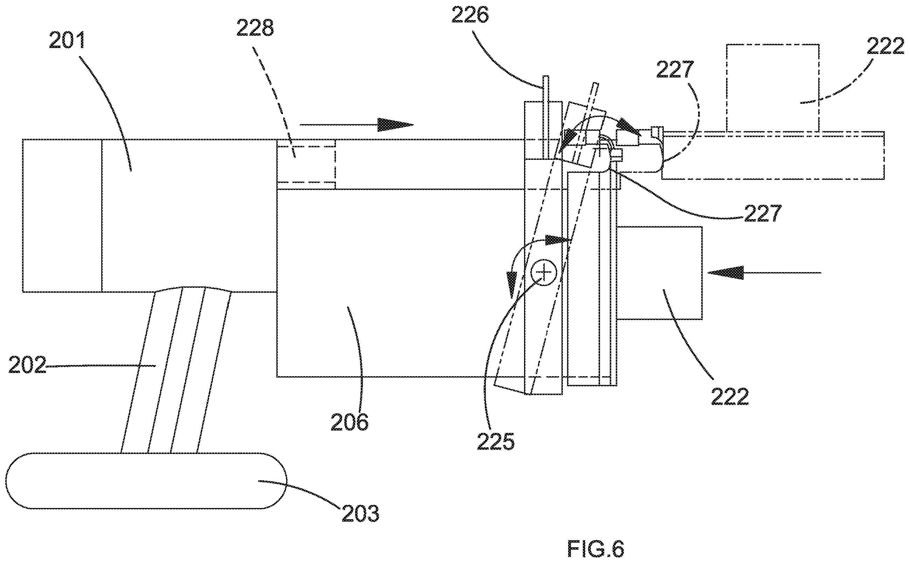

A second hand-held vacuum cleaner in accordance with the invention is shown generally as 200 in figure 4. The cleaner includes a cylindrical motor and suction fan housing 201. Depending from a wall of the fan housing is a 'pistol' hand grip 202, best seen in figure 6. Attached to a distal end of the grip is a battery pack 203 which includes multiple rechargeable cells (not visible), such as Li-ion cells. The battery pack has a generally planar configuration with curved front and rear walls, and flat vertical side cheeks, as shown in figure 4. A cylindrical vacuum chamber housing 206, shown in figure 4, is attached to a front-end region of the fan housing 201. The axis of the chamber is aligned parallel but offset from the axis of the motor and suction fan housing. The chamber interior is in gas communication with the suction fan via internal ducting (not shown) so as to be capable of maintaining a reduced pressure in the chamber. An upper region of the chamber housing is provided with an elongate cheek piece 207 having a curved convex outer surface. A sliding elongate shuttle member 208, also having a curved convex upper surface is slidably attached to the cheek piece so as to permit translational movement of the shuttle member forwards and backwards (in an axial direction). A frontend region of the shuttle member is provided with a cut-out shoulder region 209, which accommodates a circumferential, cylindrical sidewall 221 of an end-cap 220 of the vacuum chamber housing.

The end-cap is formed with a central stub tube 222 which is coaxial with the vacuum chamber sidewalls. An upper region of the end-cap sidewall 221 is attached to an upper surface of the shuttle member by a hinge 223. Thus, the end-cap 220 may be rotated from a closed position (solid lines) to an open position (ghost lines), as shown in figure 6. A hoop 224 surrounds the vacuum chamber housing and is attached to the housing sidewall at opposing diametrically aligned pivots 225. An upper region of the hoop is provided with a convex upstanding fin 226. The hoop with fin serves as an actuation lever by which an operator may open the end-cap for removal or re-loading of a filter cartridge 210 (shown in figure 5). In operation the lever is pushed forwards manually by gripping the fin 226. This shifts the shuttle member and end-cap forwards. Once the end-cap sidewalls have been shifted beyond the distal end of the vacuum chamber housing (as shown in figures 5 and 6) the end-0cap is free to rotate (90 degrees) up to the open position. The end-cap is urged into the open position and held there by the camming surface of a front nub 227 of the shuttle member. The compression spring 228 urges the shuttle member and nub 227 to the open position.

The filter cartridge has a cylindrical body portion 211, formed of a porous filter membrane (such as a HEPA filter), and a disc-shaped end piece 212, also formed of the filter membrane, which may be attached to the body portion by a glued seam, or weld or moulded to as a unitary component with the body portion. A front end of the filter cartridge is provided with a rigid spider member 230. The spider member has eight equi-spaced spokes extending from a centrally located collar region 231. An annular web of filter material is attached to the spokes and supported by them. The arms extend to an annular circumferential rim 232. The outside face of the rim is provided with a circular seal. A circular central seal 233 is also provided on the face of the collar region 231. The collar region defines a central opening 234 into the interior of the filter cartridge. The spider member is formed of plastics material which provides sufficient rigidity to support the filter shape, but which is rigid enough to maintain an air seal when the annular spider member abuts an inside surface of the front wall 217 of the end-cap 220.

In the closed end-cap position, the stub tube 222 serves as an air inlet port from a nozzle or hose (neither shown) of the vacuum cleaner. The inlet port feeds into the interior of the vacuum chamber housing 206. When the vacuum cleaner is loaded with a cartridge the inlet port feeds into the cartridge interior via the opening 234. An annular region is provided around the outside of the filter cartridge in the gap between the vacuum chamber inside wall. This region is in air communication with the suction fan in the fan housing. In use, this induces air to flow through the stub tube, into the filter interior and past the filter membrane into the suction fan.

When the filter cartridge is full, or a cleaning task is complete, the hoop may be tilted forwards using the fin 226. The end-cap is released and displaced so as to provide clearance for the filter cartridge to drop out in an axial direction, when the cleaner is pointed down. In this way the filter cartridge may be removed without touching the dirty filter membrane of the cartridge. This prevent contamination and the need to hold the cartridge. Because the body of the filter cartridge is not gripped during removal, there is no tendency for air and dirt (or collected matter) to puff out of the filter. When a new filter is inserted, and the end-cap is closed, the end-cap holds the filter rim 232 securely against the vacuum chamber free end.

The present invention as set out and defined in the claims hereinafter provides vacuum cleaners in which operator contamination is far less likely during the filter bag/cartridge removal process. The present invention concerns the field of vacuum cleaners and, in particular, those which have a filter bag for collecting air entrained detritus. The invention relates especially to a vacuum cleaner which reduces the exposure to the operator of dust and contaminated matter collected during cleaning when replacing the filter bag. The invention provides a vacuum cleaner comprising a suction drive unit in fluid communication with a vacuum chamber for accommodating a filter cartridge, the vacuum chamber itself being fed by a fluid inlet port in communication with a nozzle via which air is drawn into the vacuum chamber when the suction drive unit is in operation, wherein the filter cartridge comprises a gas-porous membrane including wall portions which define a filter interior, the cartridge having an airflow inlet at one end through which air entrained dirt enters the filter, with dirt retained in the interior and air passing through the gas-porous membrane, wherein the chamber is configurable between open and closed configurations, so that in the closed configuration the cartridge filter is enclosed and constrained within the vacuum chamber with the cartridge inlet disposed so as to be fed by the fluid inlet port, and in the open configuration the constraint is at least partially removed so that the cartridge is free to be removed from the chamber by travel in a removal direction.

## Claims

1. A vacuum cleaner (100, 200) comprising a suction drive unit (101, 201) in fluid communication with a vacuum chamber (106, 206) for accommodating a filter cartridge (111), the vacuum chamber (106, 206) itself being fed by a fluid inlet port in communication with a nozzle via which air is drawn into the vacuum chamber (106, 206) when the suction drive unit (101, 201) is in operation, wherein the filter cartridge (111, 211) comprises a gas-porous membrane including wall portions which define a filter interior, the cartridge (111, 211) having an airflow inlet at one end through which air-entrained dirt enters the filter (111, 211), with dirt retained in the interior and air passing through the gas-porous membrane, wherein the chamber (106, 206) is configurable between open and closed configurations, so that in the closed configuration the cartridge filter (111, 211), is enclosed and constrained within the vacuum chamber (106, 206) with the cartridge inlet disposed so as to be fed by the fluid inlet port (120, 222), and in the open configuration the constraint is at least partially removed so that the cartridge (111, 211) is free to be removed from the chamber (106, 206) by travel in a removal direction, and **characterised in that** the chamber is generally cylindrical in form, and in the open configuration a chamber wall portion is displaced to remove the constraint, wherein the chamber wall portion is an end-cap of the chamber (106, 206) and the end-cap is displaced by opening thereof, wherein the end-cap is provided at a nozzle-end region of the chamber (106, 206).

2. A vacuum cleaner (100, 200) as claimed in claim 1, wherein the end-cap is hinged with respect to the chamber so as to be openable by hinged rotation.

3. A vacuum cleaner (100, 200) as claimed in claim 2, wherein the fluid inlet is provided through the end-cap.

4. A vacuum cleaner (100, 200) as claimed in any previous claim, wherein a release latch mechanism is provided for the end-cap, operation of which causes the end-cap to be displaced from the closed to open configuration.

5. A vacuum cleaner (100, 200) as claimed in claim 4, wherein the latch mechanism comprises an axially slidable actuation shuttle, travel of which displaces a release latch.

6. A vacuum cleaner (100, 200) as claimed in claim 5, wherein the latch mechanism includes biasing means which acts to urge the end-cap to the open configuration, so that on release the end-cap springs open.

7. A vacuum cleaner (100, 200) as claimed in any preceding claim, configured and arranged so that in the open configuration the cartridge (111, 211) is free to drop-out from the chamber (106, 206) under gravity when the orientation of the chamber permits.

8. A vacuum cleaner (100, 200) as claimed in any preceding claim, which is configured as a hand-held vacuum cleaner (100, 200) having a longitudinal axis, the cleaner (100, 200) comprising at a proximal end region thereof a suction drive in fluid communication with a generally cylindrical vacuum chamber (106, 206) disposed adjacent the suction drive, the vacuum chamber (106, 206) being aligned co-axially with the longitudinal axis, or an axis parallel thereto, a co-axial inlet port for air entrained dirt being provided through a distal end wall of the vacuum chamber (106, 206), the port being fed by a nozzle provided at a distal end region of the vacuum cleaner (100, 200), wherein a pistol grip is provided at the proximal end region, which pistol grip extends in a generally radial direction so as to facilitate manual pointing of the vacuum cleaner chamber (106, 206) and nozzle along the longitudinal axis.

9. A vacuum cleaner (100, 200) as claimed in any of the preceding claims, wherein the filter cartridge (111, 211) is located in the vacuum chamber (106, 206) and has a generally cylindrical configuration with an annular distal end which defines an inlet port of the cartridge (111, 211) which opens into the cartridge interior, which inlet port is aligned with the inlet port of the vacuum chamber (106, 206).

10. A vacuum cleaner as claimed in any preceding claim, wherein a generally annular space is defined between the generally cylindrical filter cartridge (111, 211) and an inside surface of the generally cylindrical vacuum chamber (106, 206), the generally annular space being in fluid communication with the suction drive and providing an exit path for filtered air passing out of the cartridge filter (111, 211).

11. A vacuum cleaner as claimed in claim 9, wherein the cartridge (111, 211) is elongate and disposed in the vacuum coaxial with, or parallel to, the longitudinal axis.

12. A vacuum cleaner (100, 200) as claimed in any of the preceding claims, wherein the filter cartridge (111, 211) comprises supporting structure which defines and locates the airflow inlet.

13. A vacuum cleaner as claimed in claim 12, wherein the supporting structure comprises a rigid structure which is provided at an airflow inlet end of the cartridge (111, 211).

14. A vacuum cleaner (100, 200) as claimed in any preceding claim, wherein the filter cartridge (111, 211) comprises supporting structure to make the cartridge self-supporting so to define and maintain an internal space in the cartridge (111, 211).

15. A vacuum cleaner as claimed in any of claims 12 to 14, wherein the supporting structure includes a tongue or tab adjacent the airflow inlet, which tongue or tab serves to facilitate grasping or lifting the filter cartridge (111, 211).

## Patentansprüche

1. Staubsauger (100, 200), der eine Saugantriebseinheit (101, 201) umfasst, die mit einer Unterdruckkammer (106, 206) zum Aufnehmen einer Filterpatrone (111) fluidverbunden ist, wobei die Unterdruckkammer (106, 206) selbst über eine Fluideinlassöffnung gespeist wird, die mit einer Düse verbunden ist, über die Luft in die Unterdruckkammer (106, 206) gesaugt wird, wenn die Saugantriebseinheit (101, 201) in Betrieb ist, wobei die Filterpatrone (111, 211) eine gasdurchlässige Membran mit Wandabschnitten umfasst, die einen Filterinnenraum definieren, wobei die Patrone (111, 211) an einem Ende einen Luftstromeinlass aufweist, durch den von Luft mitgerissener Schmutz in den Filter (111, 211) eintritt, wobei Schmutz in dem Innenraum zurückbleibt und Luft durch die gasdurchlässige Membran hindurchströmt, wobei die Kammer (106, 206) zwischen einer offenen und einer geschlossenen Konfiguration konfigurierbar ist, so dass der Patronenfilter (111, 211) in der geschlossenen Konfiguration in der Unterdruckkammer (106, 206) eingeschlossen und eingegrenzt ist, wobei der Patroneneinlass so angeordnet ist, dass er über die Fluideinlassöffnung (120, 222) gespeist wird, und die Eingrenzung in der offenen Konfiguration zumindest zum Teil aufgehoben ist, so dass die Patrone (111, 211) durch Bewegen in einer Entnahmerichtung aus der Kammer (106, 206) genommen werden kann, und **dadurch gekennzeichnet, dass** die Kammer allgemein zylinderförmig und ein Kammerwandabschnitt in der offenen Konfiguration so verlagert ist, dass die Eingrenzung aufgehoben ist, wobei es sich bei dem Kammerwandabschnitt um eine Abschlusskappe der Kammer (106, 206) handelt und die Abschlusskappe durch Öffnen verlagert wird, wobei die Abschlusskappe in einem Düsenendebereich der Kammer (106, 206) vorgesehen ist.

2. Staubsauger (100, 200) nach Anspruch 1, wobei die Abschlusskappe an die Kammer angelenkt ist und sich so durch Aufklappen öffnen lässt.

3. Staubsauger (100, 200) nach Anspruch 2, wobei der Fluideinlass in der Abschlusskappe vorgesehen ist.

4. Staubsauger (100, 200) nach einem der vorhergehenden Ansprüche, wobei ein Schnappverschlussmechanismus für die Abschlusskappe vorgesehen ist, dessen Betätigung bewirkt, dass sich die Abschlusskappe aus der geschlossenen in die offene Konfiguration verlagert.

5. Staubsauger (100, 200) nach Anspruch 4, wobei der Verschlussmechanismus eine axial verschiebbare Betätigungspendelvorrichtung umfasst, durch deren Bewegen ein Schnappverschluss verlagert wird.

6. Staubsauger (100, 200) nach Anspruch 5, wobei der Verschlussmechanismus ein Vorspannmittel aufweist, das die Abschlusskappe in die offene Konfiguration drückt, so dass diese bei Freigabe aufspringt.

7. Staubsauger (100, 200) nach einem der vorhergehenden Ansprüche, der so konfiguriert und angeordnet ist, dass die Patrone (111, 211) in der offenen Konfiguration unter Schwerkraftwirkung aus der Kammer (106, 206) fallen kann, wenn die Ausrichtung der Kammer dies zulässt.

8. Staubsauger (100, 200) nach einem der vorhergehenden Ansprüche, der als Handstaubsauger (100, 200) mit einer Längsachse konfiguriert ist, wobei der Sauger (100, 200) an einem proximalen Endbereich einen Saugantrieb umfasst, der mit einer an den Saugantrieb angrenzend angeordneten, allgemein zylinderförmigen Unterdruckkammer (106, 206) fluidverbunden ist, wobei die Unterdruckkammer (106, 206) koaxial an der Längsachse oder einer parallel dazu verlaufenden Achse ausgerichtet ist, wobei in einer distalen Stirnwand der Unterdruckkammer (106, 206) eine koaxiale Einlassöffnung für von Luft mitgerissenen Schmutz vorgesehen ist, die über eine Düse in einem distalen Endbereich des Staubsaugers (100, 200) gespeist wird, wobei in dem proximalen Endbereich ein Pistolengriff vorgesehen ist, der sich in allgemein radialer Richtung so erstreckt, dass er ein manuelles Richten der Staubsaugerkammer (106, 206) und der Düse entlang der Längsachse ermöglicht.

9. Staubsauger (100, 200) nach einem der vorhergehenden Ansprüche, wobei sich die Filterpatrone (111, 211) in der Unterdruckkammer (106, 206) befindet und eine allgemein zylinderförmige Konfiguration mit einem ringförmigen distalen Ende aufweist, das eine Einlassöffnung der Patrone (111, 211) definiert, die in den Patroneninnenraum mündet, wobei die Einlassöffnung auf die Einlassöffnung der Unterdruckkammer (106, 206) ausgerichtet ist.

10. Staubsauger nach einem der vorhergehenden Ansprüche, wobei zwischen der allgemein zylinderförmigen Filterpatrone (111, 211) und einer Innenfläche der allgemein zylinderförmigen Unterdruckkammer (106, 206) ein allgemein ringförmiger Raum definiert ist, der mit dem Saugantrieb fluidverbunden ist und einen Austrittsweg für gefilterte Luft darstellt, die aus dem Patronenfilter (111, 211) herausströmt.

11. Staubsauger nach Anspruch 9, wobei die Patrone (111, 211) länglich und koaxial oder parallel zu der Längsachse in dem Unterdruck angeordnet ist.

12. Staubsauger (100, 200) nach einem der vorhergehenden Ansprüche, wobei die Filterpatrone (111, 211) eine Stützkonstruktion umfasst, die den Luftstromeinlass definiert und örtlich festlegt.

13. Staubsauger nach Anspruch 12, wobei die Stützkonstruktion eine steife Konstruktion umfasst, die an einem Luftstromeinlassende der Patrone (111, 211) vorgesehen ist.

14. Staubsauger (100, 200) nach einem der vorhergehenden Ansprüche, wobei die Filterpatrone (111, 211) eine Stützkonstruktion umfasst, durch die sich die Patrone (111, 211) selbst stützt und so einen Innenraum in sich definiert und aufrechterhält.

15. Staubsauger nach einem der Ansprüche 12 bis 14, wobei die Stützkonstruktion neben dem Luftstromeinlass eine Zunge oder Lasche aufweist, die dazu dient, ein Ergreifen oder Anheben der Filterpatrone (111, 211) zu ermöglichen.

## Revendications

1. Aspirateur (100, 200) comprenant une unité d'entraînement par aspiration (101, 201) en communication fluidique avec une chambre à vide (106, 206) destinée à recevoir une cartouche de filtre (111), la chambre à vide (106, 206) étant elle-même alimentée par un orifice d'entrée de fluide en communication avec une buse par l'intermédiaire de laquelle de l'air est attiré dans la chambre à vide (106, 206) lorsque l'unité d'entraînement par aspiration (101, 201) est en marche, dans lequel la cartouche de filtre (111, 211) comprend une membrane poreuse aux gaz comportant des parties de paroi qui définissent un intérieur de filtre, la cartouche (111, 211) présentant une entrée de flux d'air au niveau d'une extrémité à travers laquelle la saleté entraînée par l'air entre dans le filtre (111, 211), ladite saleté étant retenue à l'intérieur et l'air passant à travers la membrane poreuse aux gaz, dans lequel la chambre (106, 206) peut être configurée entre des configurations ouverte et fermée, de sorte que dans la configuration fermée le filtre à cartouche (111, 211) soit enfermée et contrainte à l'intérieur de la chambre à vide (106, 206) avec l'entrée de cartouche disposée de manière à être alimentée par l'orifice d'entrée de fluide (120, 222), et dans la configuration ouverte la contrainte soit au moins partiellement retirée de sorte que la cartouche (111, 211) soit libre d'être retirée de la chambre (106, 206) par déplacement dans une direction de retrait, et **caractérisé en ce que** la chambre est de forme généralement cylindrique, et dans la configuration ouverte une partie de paroi de chambre est déplacée pour retirer la contrainte, dans lequel la partie de paroi de chambre est un bouchon d'extrémité de la chambre (106, 206) et le bouchon d'extrémité est déplacé par son ouverture, dans lequel le bouchon d'extrémité est fourni au niveau d'une région d'extrémité de buse de la chambre (106, 206).

2. Aspirateur (100, 200) selon la revendication 1, dans lequel le bouchon d'extrémité est articulé par rapport à la chambre de manière à pouvoir être ouvert par rotation articulée.

3. Aspirateur (100, 200) selon la revendication 2, dans lequel l'entrée de fluide est fournie à travers le bouchon d'extrémité.

4. Aspirateur (100, 200) selon l'une quelconque des revendications précédentes, dans lequel un mécanisme de loquet de déverrouillage est fourni pour le bouchon d'extrémité, dont le fonctionnement amène le bouchon d'extrémité à être déplacé de la configuration fermée à la configuration ouverte.

5. Aspirateur (100, 200) selon la revendication 4, dans lequel le mécanisme de loquet comprend une navette d'actionnement à coulissement axial, dont le déplacement déplace un loquet de déverrouillage.

6. Aspirateur (100, 200) selon la revendication 5, dans lequel le mécanisme de loquet comporte un moyen de sollicitation qui agit pour pousser le bouchon d'extrémité vers la configuration ouverte, de sorte que lors du déverrouillage le bouchon d'extrémité s'ouvre par ressort.

7. Aspirateur (100, 200) selon l'une quelconque des revendications précédentes, configuré et agencé de sorte que dans la configuration ouverte la cartouche (111, 211) soit libre de tomber de la chambre (106, 206) sous l'effet de la gravité lorsque l'orientation de la chambre le permet.

8. Aspirateur (100, 200) selon l'une quelconque des revendications précédentes, qui est configuré comme un aspirateur (100, 200) à main présentant un axe longitudinal, l'aspirateur (100, 200) comprenant au niveau d'une région d'extrémité proximale de celui-ci un entraînement par aspiration en communication fluidique avec une chambre à vide (106, 206) généralement cylindrique disposée adjacente à l'entraînement par aspiration, la chambre à vide (106, 206) étant alignée coaxialement avec l'axe longitudinal, ou avec un axe parallèle à celui-ci, un orifice d'entrée coaxial pour la saleté entraînée par l'air étant fourni à travers une paroi d'extrémité distale de la chambre à vide (106, 206), l'orifice étant alimenté par une buse fournie au niveau d'une région d'extrémité distale de l'aspirateur (100, 200), dans lequel une poignée-pistolet est fournie au niveau de la région d'extrémité proximale, ladite poignée-pistolet s'étendant dans une direction généralement radiale de manière à faciliter un pointage manuel de la chambre (106, 206) d'aspirateur et de la buse le long de l'axe longitudinal.

9. Aspirateur (100, 200) selon l'une quelconque des revendications précédentes, dans lequel la cartouche de filtre (111, 211) est située dans la chambre à vide (106, 206) et présente une configuration généralement cylindrique avec une extrémité distale annulaire qui définit un orifice d'entrée de la cartouche (111, 211) qui s'ouvre dans l'intérieur de la cartouche, ledit orifice d'entrée étant aligné avec l'orifice d'entrée de la chambre à vide (106, 206).

10. Aspirateur selon l'une quelconque des revendications précédentes, dans lequel un espace généralement annulaire est défini entre la cartouche de filtre (111, 211) généralement cylindrique et une surface intérieure de la chambre à vide (106, 206) généralement cylindrique, l'espace généralement annulaire étant en communication fluidique avec l'entraînement par aspiration et fournissant un trajet de sortie pour de l'air filtré sortant du filtre de cartouche (111, 211).

11. Aspirateur selon la revendication 9, dans lequel la cartouche (111, 211) est allongée et disposée dans le vide coaxial avec, ou parallèle à, l'axe longitudinal.

12. Aspirateur (100, 200) selon l'une quelconque des revendications précédentes, dans lequel la cartouche de filtre (111, 211) comprend une structure de support qui définit et localise l'entrée de flux d'air.

13. Aspirateur selon la revendication 12, dans lequel la structure de support comprend une structure rigide qui est disposée au niveau d'une extrémité d'entrée de flux d'air de la cartouche (111, 211).

14. Aspirateur (100, 200) selon l'une quelconque des revendications précédentes, dans lequel la cartouche de filtre (111, 211) comprend une structure de support pour amener la cartouche à être autoportante de manière à définir et à maintenir un espace interne dans la cartouche (111, 211).

15. Aspirateur selon l'une quelconque des revendications 12 à 14, dans lequel la structure de support comporte une languette ou patte adjacente à l'entrée de flux d'air, ladite languette ou patte servant à faciliter la préhension ou le levage de la cartouche de filtre (111, 211).
